# EUROPEAN PATENT SPECIFICATION

(11) **EP 2 455 158 B1**
(45) Date of publication and mention of the grant of the patent: **23.04.2014**
(21) Application number: 10799420.4
(22) Date of filing: 28.06.2010
(51) Int. Cl.: B01J 8/24, F28D 1/04, F28F 1/00, F22B 31/00, F22B 37/10, F28F 9/22, B01J 8/08, B01J 19/00, F28D 7/00, F28D 7/16

(54) **COOLING BAFFLES OF U-SHAPED RETURNING DEVICE**
PRALLKÜHLUNGSPLATTEN FÜR EINE U-FÖRMIGE RÜCKFÜHRVORRICHTUNG
CHICANES DE REFROIDISSEMENT D'UN DISPOSITIF DE RETOUR EN FORME DE U

(30) Priority: 15.07.2009 CN 200910088977
(43) Date of publication of application: 23.05.2012
(73) Proprietor: Institute Of Engineering Thermophysics, Chinese Academy Of Sciences, Beijing 100190 (CN)
(72) Inventor: LU, Qinggang, Beijing 100190 (CN); GAO, Ming, Beijing 100190 (CN); LI, Shiyuan, Beijing 100190 (CN); SUN, Yunkai, Beijing 100190 (CN); BAO, Shaolin, Beijing 100190 (CN); WANG, Dongyu, Beijing 100190 (CN); NA, Yongjie, Beijing 100190 (CN)
(74) Representative: Mattsson, Niklas
(86) International application number: PCT/CN2010/074626
(87) International publication number: WO 2011/006422

(56) References cited:
- EP-A1- 0 293 594
- EP-A1- 2 447 604
- EP-A2- 0 444 926
- CN-A- 1 912 461
- CN-A- 101 596 433
- CN-Y- 201 427 045
- JP-A- 2000 314 506
- US-A- 4 813 479
- US-A- 5 140 950

## Description

### Field of the Invention

The present invention relates to the field of solid material returning technology, and, in particular to partitions for U-valve for circulating fluidized beds.

### Description of the Related Arts

In the material circulating circuit of the circulating fluidized bed, the loop seal plays an extremely key role. The common types of loop seal are as follows: L-valve, J-valve, seal pot, and U-valve, etc.. Currently, U-valve is the most popular.

According to the wall surface cooling condition, the loop seal may be classed into two categories, that is, the cooling loop seal and the thermal insulation loop seal; and the latter one is more popular. However, in the material circulating circuit at high temperature, for example in the equipments such as circulating fluidized bed boiler and circulating fluidized bed incinerator, there are two challenges for the common thermal insulation loop seal. First, the unburned carbon can be combusted in the loop seal, and it's hard to control the temperature, especially, it is prone to be coked for the fuel with lower ash fusion point, for example, when the biomass fuel is fired. Second, the thermal insulation loop seal and the membrane walls of the furnace have different expansion extents and the expansion difference between them can only be adjusted by expansion joints.

When the cooling loop seal especially the one cooled by drum water is adopted, the expansion difference between the loop seal and membrane walls may be greatly reduced or even be eliminated, and thus the expansion joints may not be needed, which will simplify the equipments. Further, circulating particles temperature in the cooling loop seal would be reduced so that the material temperature can be efficiently controlled and kept much lower than the coking temperature, which is helpful for the safe operation.

However, the casing of current water-cooling U-valve is usually membrane walls, and the intermediate partition between the downcomer and riser and material returning partition between the riser and return chute are made of refractory. Thus, expansion coefficients of the partitions and the casing are different and the gap will easily occur between them especially during the start-up and shut-down of the equipments. Once the circulating particles enter the gap, the partitions are likely to be cracked.

A water-cooling U-valve is disclosed in EP 2447604, which forms part of the state of the art within the meaning of Art. 54(3) EPC for the present specification. The U-valve is composed of a downcomer, a riser, and a return chute, which are sequentially connected. An intermediate partition is disposed between the downcomer and the riser, the lower parts of which are interconnected. A material returning partition is disposed between the riser and the return chute, the upper parts of which are interconnected. The casing of U-valve is membrane walls, the inside of which are laid with refractory. Some water-cooling tubes of the membrane walls extend into the inside of the U-valve, forming the water cooling intermediate partition and material returning partition. There are headers for both the intermediate partition and the material returning partition, and the headers are connected with the headers formed by some water-cooling tubes of membrane walls by connecting tubes. The U-valve eliminates expansion difference between the partitions and the casing, which can extend the working life of the partitions and realize the long-term safe and stable operation of the U-valve.

An example of a fluidized bed reactor is disclosed in EP 0293594. Heat is carried off by cooling surfaces in a reactor chamber and in a separator of the fluidized bed reactor.

### SUMMARY OF THE INVENTION

Accordingly, it is at least one objective of the present invention to provide cooling partitions which are able to cool the intermediate and the material returning partitions for the U-valve, thus the working life of the cooling partitions can be prolonged, which enables the long-term, safe and stable operation of the loop seal.

In order to achieve the above-mentioned objective, the present invention provides at least the following technical solutions:

The cooling partitions for U-valve include an intermediate partition 4 located vertically between a downcomer 1 and a riser 2 of the U-valve, and a material returning partition 5 located vertically between the riser 2 and a return chute 3, with the characteristics in that: the intermediate partition 4 and material returning partition 5 comprise cooling tube bundles and refractory covered at the outer surface of cooling tubes; at least one end of the cooling tube bundles extends out of the casing of the loop seal and is connected with a header at the outside of the casing of the loop seal; and a cooling medium flow path for the cooling partitions is independent of a cooling medium flow path in the casing of the U-valve.

In one embodiment, in the cooling partitions for the U-valve, the cooling medium in the cooling tubes is the boiler feedwater or medium at the outlet of boiler economizer or the saturated steam from drum.

In one embodiment, in the cooling partitions for the U-valve, the cooling medium in the cooling tubes is circulating water from drum downcomer.

In one embodiment, in the cooling partitions for the U-valve, the cooling tubes are vertically arranged, and the cooling medium in the cooling tubes flows in a vertical direction, and there are fins are among said cooling tubes.

In one embodiment, in the cooling partitions for the U-valve, the upper ends of cooling tube bundles for said intermediate partition 4 extend out of the casing of the loop seal, and converges into the upper header 43 for the intermediate partition which is located at the outside of the loop seal, and the lower ends converge into the lower header 44 for the intermediate partition which is located at the inside of the loop seal; and, the lower ends of cooling tube bundles for said material returning partition 5 extend out of the casing of the loop seal and converge into a lower header 54 for the material returning partition which is located at the bottom of the loop seal, and the upper ends converge into the upper header 53 for the intermediate partition which is located at the inside of the loop seal;

The headers 44 and 53 in the loop seal are covered with refractory;

The upper header 43 and the lower header 44 for the intermediate partition, the upper header 53 and the lower header 54 for the material returning partition are all horizontally arranged.

In one embodiment, in the cooling partitions of the U-valve, the tubes of said cooling tube bundles are horizontally arranged, and the cooling medium in said cooling tubes flows in the horizontal direction, and there are fins among these cooling tubes.

In one embodiment, in the cooling partitions for the U-valve, both ends of the cooling tubes for said intermediate partition 4 and material returning partition 5 extend out of the casing of the loop seal and then converge into the headers located at both sides of the casing of the loop seal; and, the left and right sides of both the intermediate partition 4 and material returning partition 5 are connected with headers 41, 42, 51, 52, respectively, and these four headers are all vertically arranged.

In one embodiment, in the cooling partitions for the U-valve, said intermediate partition 4 and material returning partition 5 are connected in parallel, that is, the headers at the left or right side of both the intermediate partition 4 and material returning partition 5 are served as the inlet header for cooling medium in the cooling tubes, and the headers at the other side of both the intermediate partition 4 and material returning partition 5 are served as the outlet header for cooling medium; and, the cooling medium flows horizontally through the intermediate partition 4 and material returning partition 5 at the same time.

In one embodiment, in the cooling partitions for the U-valve, said intermediate partition 4 and material returning partition 5 are connected in series, that is, the headers at the left side of both the intermediate partition 4 and material returning partition 5 are connected via the connecting tubes for the headers, and one of the headers at the right side of both the intermediate partition 4 and material returning partition 5 is served as the inlet header for cooling medium while the other one is served as the outlet header for cooling medium; and, the cooling medium flows horizontally through the intermediate partition 4 and the material returning partition 5 in turn, or through the material returning partition 5 first and then through the intermediate partition 4.

In one embodiment, in the cooling partitions for the U-valve, said intermediate partition 4 and material returning partition 5 are connected in series, that is, the headers at the right side of both the intermediate partition 4 and material returning partition 5 are connected via the connecting tubes for the headers, and one of the headers at the left side of both the intermediate partition 4 and material returning partition 5 is served as the inlet header for cooling medium while the other is served as the outlet header; and, the cooling medium flows horizontally through the intermediate partition 4 and the material returning partition 5 in turn, or through the material returning partition 5 first and then through the intermediate partition 4.

In one embodiment, in the cooling partitions for the U-valve, both ends of the cooling tubes for said intermediate partition 4 and material returning partition 5 extend out of the casing of the loop seal and converge into the headers at both sides of the casing of the loop seal; and,
the headers 451 and 452 are placed at both sides of the casing of the loop seal; the left ends of the cooling tubes for said intermediate partition 4 and material returning partition 5 converge into the left header 451, and the right ends of the cooling tubes for said intermediate partition 4 and material returning partition 5 converge into the right header 452; and, either of the left header 451 or the right header 452 is served as the inlet header for cooling medium in the cooling tubes while the other one is served as the outlet header.

In one embodiment, in the cooling partitions for the U-valve, the cooling tubes of said cooling tube bundles are U-shaped, and the straight segment of them is vertically arranged; both ends of the cooling tubes extend out of the casing of the loop seal and converge into the two headers 431 and 432 or 543 and 544 at the outside of the casing of the loop seal, respectively, and the four headers 431, 432, 543, 544 are horizontally arranged; and the cooling medium flows along the vertical direction in the vertical segments of the U-shaped cooling tubes.

In one embodiment, in the cooling partitions for the U-valve, the center line of the segment of U-shaped cooling tubes for the intermediate partition 4 inside of the casing of the loop seal , is located in one plane; the center line of the segment of the U-shaped cooling tubes for the material returning partition 5 inside of the casing of the loop seal is located in another plane; the two planes mentioned above are perpendicular to the planes where the center lines of the downcomer and riser are located; and, there are fins among these cooling tubes.

In one embodiment, in the cooling partitions for the U-valve, the planes where the center lines of the segments of each U-shaped cooling tube for said intermediate partition 4 and material returning partition 5 inside the casing of the loop seal are located are paralleled, and also are in parallel with the planes where the center lines of the downcomer and riser are located.

Accordingly, according to the present invention, the structure of the cooling partitions for the U-valve is simple, and the medium flow is smooth, which can reliably cool the intermediate partition and material returning partition for the U-valve, and facilitates the protection of the partitions. Thus, the working life of the cooling partitions can be prolonged, which can guarantee the long-term, safe and stable operation of the loop seal.

### BRIEF DESCRIPTION OF THE DRAWINGS

Fig. 1 is a longitudinal cross-sectional schematic view of cooling partitions for the U-valve according to first and second embodiments of the present invention;
Fig. 2 is a top view of cooling tubes and related headers for the cooling partitions for the U-valve according to the first embodiment of the present invention, in which the running direction of the cooling medium is marked;
Fig. 3 is a top view of the cooling tubes and the related headers for cooling partitions for the U-valve according to the second embodiment of the present invention, in which the running direction of the cooling medium is marked;
Fig. 4 is a schematic view of the cooling partitions for the U-valve according to the third embodiment of the present invention;
Fig. 5 is a schematic view of the cooling tubes and the related headers for the cooling partitions according to the third embodiment of the present invention;
Fig. 6 is a top view of the cooling tubes and the related headers for the cooling partitions for the U-valve according to the third embodiment of the present invention, in which the running direction of the cooling medium is marked;
Fig. 7 is a longitudinal cross-sectional schematic view of the cooling partitions for the U-valve according to fourth and fifth embodiments of the present invention;
Fig. 8 is an A-A cross-sectional schematic view of the cooling tubes and the related headers for the cooling partitions according to the fourth embodiment of the present invention, in which the running direction of the cooling medium is marked;
Fig. 9 is an A-A cross-sectional schematic view of the cooling tubes and the related headers for the cooling partitions according to the fifth embodiment of the present invention, in which the running direction of the cooling medium is marked;
Fig. 10 is a longitudinal cross-sectional schematic view of the cooling partitions for the U-valve according to the sixth embodiment of the present invention;
Fig. 11 is a B-B cross-sectional schematic view of the cooling partitions for the U-valve according to the sixth embodiment of the present invention, in which the running direction of the cooling medium is marked;
Fig. 12 is a longitudinal cross-sectional schematic view of the cooling partitions for the U-valve according to the seventh embodiment of the present invention;
Fig. 13 is a C-C cross-sectional schematic view of the cooling partitions for the U-valve according to the seventh embodiments of the present invention.

Note: The fins among the tubes and refractory are not shown in all of the figures.

### DETAILED DESCRIPTION OF PREFERRED EMBODIMENTS OF THE IVENTION

Cooling partitions for U-valve according to the present invention are made with the following principles.

In order to solve the problem that the expansion coefficients of thermal-insulation intermediate and material returning partitions and the water cooling loop seal are different, it is the essential way to cool the intermediate and material returning partitions. However, since the drum water from the drum downcomer is usually used in the casing of the loop seal, if cooling the partitions is directly included into the cooling process of the casing of the loop seal, the arrangement of the cooling tubes in the loop seal will be complicated due to the restriction of the running direction of the medium and the complexity of the loop seal's structure, thus it will be more difficult to manufacture the loop seal and increase the cost.

The present invention provides a cooling medium flow path for the partitions, which is independent of the cooling medium flow path in the casing of the loop seal, so that the partitions and the casing of the loop seal may adopt different cooling media. Therefore, the restriction of the running direction of drum water and the complexity of the loop seal's structure can be eliminated, and the cooling tube bundles for the partition can be simply arranged in many ways.

Boiler feedwater or the heated water from the outlet of boiler economizer or the saturated steam from the drum can be served as the cooling medium in the partitions, and the running power in the partitions is provided by a feed water pump, thus there is no need to worry about the flow resistance caused by the arrangement of the cooling tube bundles. Compared with the case of taking boiler feed water as the cooling medium in the partitions, when the medium from the outlet of boiler economizer is served as the cooling medium in the partitions, the temperature is similar to that of drum water as the cooling medium in the casing of loop seal and thus the expansion extent of this partition is closer to that of the casing. Also, the temperature of the saturated steam from drum is the same as that of the drum water, which means that the expansion extent of that partition would be closer to that of the casing.

The arrangement of the tube bundles for the partition extending out of the casing of the loop seal can make the headers be disposed as far as possible at the outside of the loop seal in order to avoid the headers being heated, which can improve the safe operation. When the cooling tube bundles are in a horizontal arrangement, the headers at the both ends may be disposed at the outside of the loop seal, and when the cooling tube bundles are in a vertical arrangement, one header is disposed at the outside the loop seal and only one header at the inside of the loop seal would be heated.

### 1^{st} Embodiment

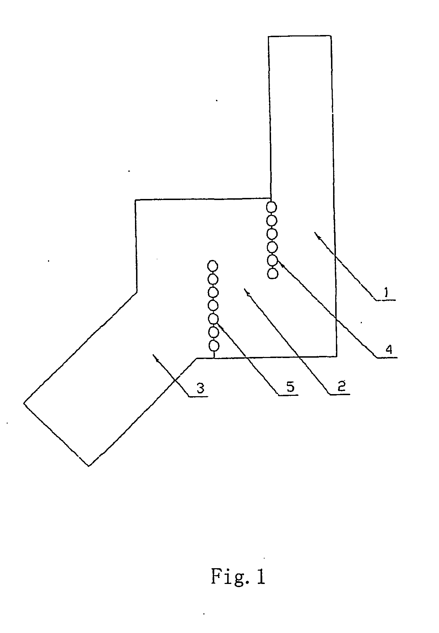

The U-valve in Fig. 1 is composed of a downcomer 1, a riser 2, and a return chute 3, which are sequentially connected, and each of which has a rectangular cross-section. An intermediate partition 4 is disposed between the downcomer 1 and riser 2, and the lower parts of the downcomer 1 and the riser 2 are interconnected. A material returning partition 5 is disposed between the riser 2 and the return chute 3, and the upper parts of the riser 2 and the return chute 3 are interconnected. The casing of the loop seal is formed by welding water cooling membrane walls, and covered with refractory at the inner surface.

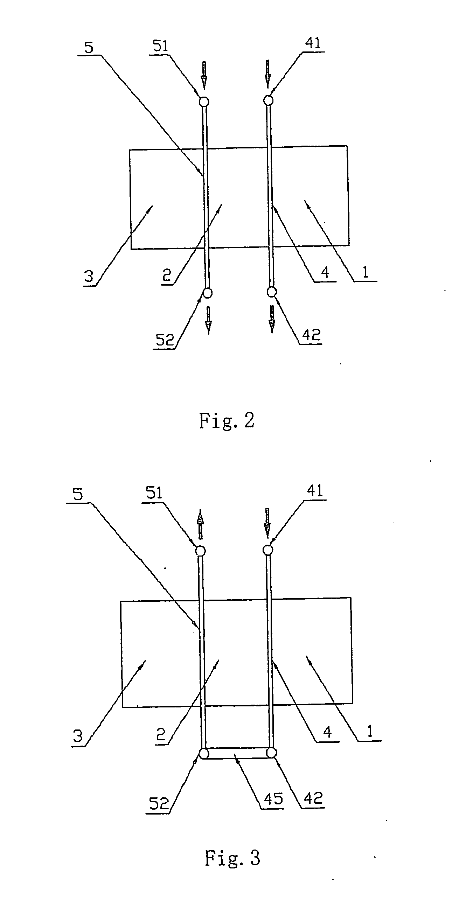

The intermediate partition 4 and the material returning partition 5 are constituted by the cooling tube bundles which are arranged horizontally. There are fins among these tubes. The outer surface of the cooling tube bundles is covered with refractory. As is shown in Fig. 2, the cooling tube bundles for the partitions extend out from both sides of the casing of the loop seal and are connected with the left header 41 and the right header 42 for the intermediate partition and the left header 51 and the right header 52 for the material returning partition, respectively.

Circulating water from the boiler drum downcomer is served as the cooling medium in the casing of the loop seal, and also in the cooling tubes of the material returning partition 5 and, it flows from the inlet header for the medium at the casing of the loop seal and into the outlet header for the medium at the casing of the loop seal through the partitions.

The left header 41 for the intermediate partition and the left header 51 for the material returning partition are served as the inlet header for the cooling medium in the partitions, where the circulating water from the boiler drum downcomer at the inlet header for the medium at the casing of the loop seal will flow into. The circulating water passes through the cooling tube bundles for the intermediate partition 4 and the material returning partition 5, and then converges into the right headers respectively, and flows to the outlet header for the medium at the casing of the loop seal.

### 2^{nd} Embodiment

The U-valve in Fig. 1 is composed of a downcomer 1, a riser 2, and a return chute 3 which are sequentially connected and each of which has a rectangular cross-section. An intermediate cooling partition 4 is disposed between the downcomer 1 and riser 2, and the lower parts of the downcomer 1 and the riser 2 are interconnected. A material returning cooling partition 5 is disposed between the riser 2 and the return chute 3, and the upper parts of the riser 2 and the return chute 3 are interconnected. The casing of the loop seal is formed by welding water cooling membrane walls and is covered with refractory at the inner surface.

The intermediate partition 4 and the material returning partition 5 are constituted by the cooling tube bundles which are arranged horizontally. There are fins among these tubes. The outer surface of the cooling tube bundles is covered with refractory. As is shown in Fig. 3, the cooling tube bundles for the partitions extend out from both sides of the casing of the loop seal and are connected with the left t header 41 and the right header 42 for the intermediate partition and the left header 51 and the right header 52 for the material returning partition, respectively.

The right header for intermediate partition 4 and the right header for material returning partition 5 are connected via a connecting tube 45. The heated boiler feedwater from the out let of boiler economizer is directed from the left header 41 for the intermediate partition, through the cooling tube bundles for the intermediate partition 4, the right header 42 for the intermediate partition 4, the connecting tube 45, the right header 52 for the material returning partition, and the cooling tube bundles for the material returning partition 5, and finally flows out from the left header 51 for the material returning partition.

### 3^{rd} Embodiment

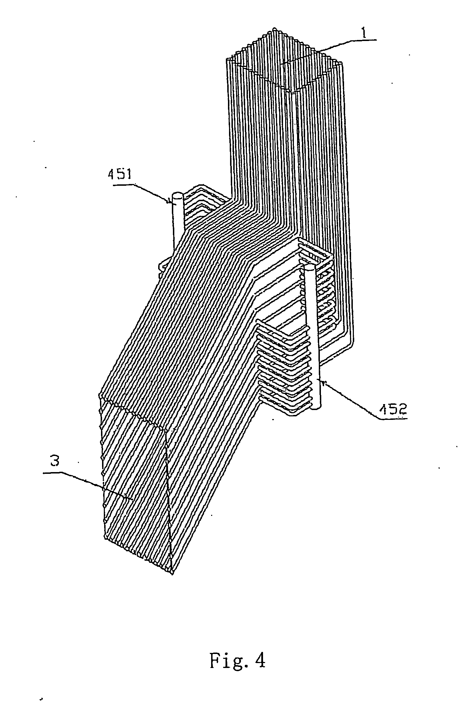

The U-valve in Fig. 4 is composed of a downcomer 1, a riser 2, and a return chute 3 which are sequentially connected and each of which has a rectangular cross-section, An intermediate cooling partition 4 is disposed between the downcomer 1 and riser 2, and the lower parts of the downcomer 1 and the riser 2 are interconnected. A material returning cooling partition 5 is disposed between the riser 2 and the return chute 3, and the upper parts of the riser 2 and the return chute 3 are interconnected. The casing of the loop seal is formed by welding water cooling membrane walls and is covered with refractory at the inner surface.

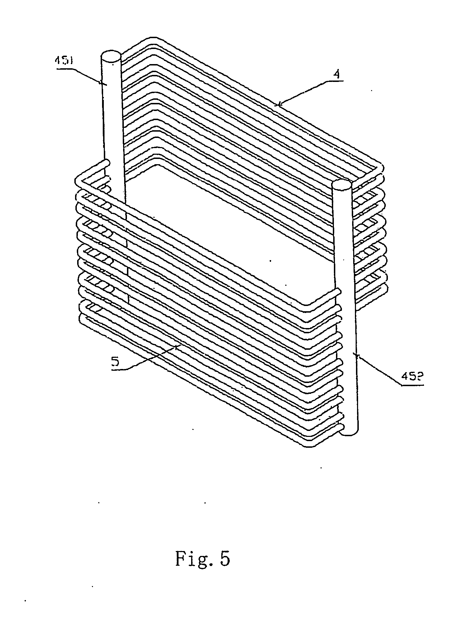

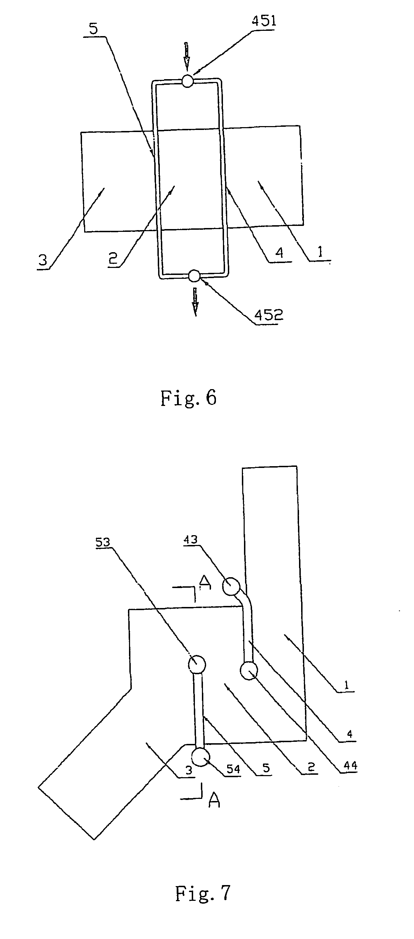

The intermediate partition 4 and the material returning partition 5 are constituted by the cooling tube bundles which are arranged horizontally. There are fins among these tubes. The outer surface of the cooling tube bundles is covered with refractory. As is shown in Figs. 5 and 6, the cooling tube bundles for the two partitions extend out from both sides of the casing of the loop seal and the left ends of the cooling tube bundles converge together into the left header 451 at the outside of the casing of the loop seal, and the right ends of the cooling tube bundles converge together into the right header 452 at the outside the casing of the loop seal.

The left header 451 is served as the inlet header for the cooling medium and the right header 452 as the outlet header for the cooling medium. The boiler feedwater enters the left header, passes through the cooling tube bundles for the intermediate partition 4 and the material returning partition 5 at the same time, and flows out from the right header and toward to the economizer.

Once there are two or more loop seals for the boiler or the incinerator, the outlet header for the cooling medium in the partition of one loop seal is connected with the inlet header for the cooling medium in the partition of the adjacent loop seal, and the outlet header for the cooling medium in the partition of the last loop seal is connected with the economizer.

### 4^{th} Embodiment

The U-valve in Fig. 7 is composed of a downcomer 1, a riser 2, and a return chute 3 which are sequentially connected and each of which has a rectangular cross-section. An intermediate cooling partition 4 is disposed between the downcomer 1 and the riser 2, and the lower parts of the downcomer 1 and the riser 2 are interconnected. A material returning cooling partition 5 is disposed between the riser 2 and the return chute 3, and the upper parts of the riser 2 and the return chute 3 are interconnected. The casing of the loop seal is formed by welding water cooling membrane walls and is covered with refractory at the inner surface.

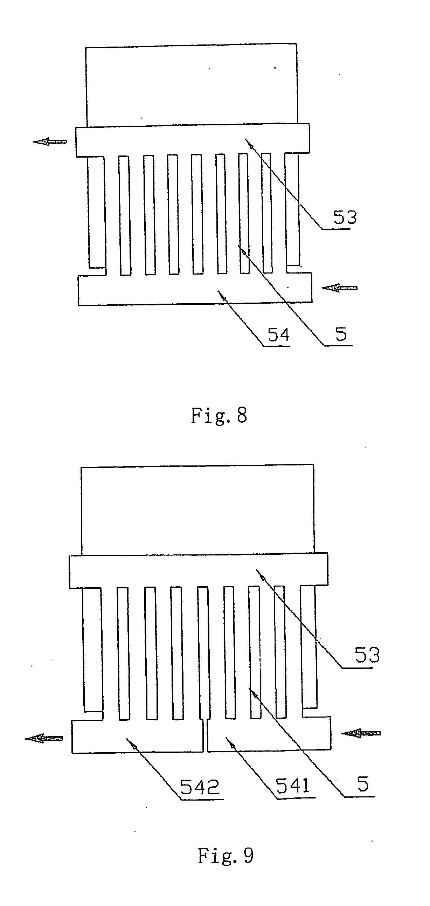

The intermediate partition 4 and the material returning partition 5 are constituted by the cooling tube bundles which are arranged vertically. There are fins among these tubes. As is shown in Fig. 8, the upper ends of the cooling tube bundles for the intermediate partition 4 extend out of the casing of the loop seal and converge into the upper header 43 for the intermediate partition 4 outside the casing of the loop seal, and the lower ends of the cooling tube bundles for the intermediate partition 4 converge into the upper header 44 for the intermediate partition 4 at the bottom of the intermediate partition 4 in the loop seal. The lower ends of the cooling tubes for the material returning partition 5 extend out of the casing of the loop seal and converges into the lower header 54 for the material returning partition 5 beneath the casing of the loop seal, and the upper ends of the cooling tubes for the material returning partition 5 converge into the upper header 53 for the material returning partition 5 at the top of the material returning partition 5 in the loop seal. Both the cooling tube bundles for the intermediate partition 4 and the material returning partition 5 and the headers 44 and 53 are covered with refractory at the outer surface.

The saturated steam from drum flows into the cooling tube bundles. The steam enters the cooling tube bundles from the left end of the lower header for the partitions, passes through cooling tube bundles and then flows out from the right end the upper header for the partitions.

### 5^{th} Embodiment

The U-valve in Fig. 7 is composed of a downcomer 1, a riser 2, and a return chute 3 which are sequentially connected and each of which has a rectangular cross-section. An intermediate cooling partition 4 is disposed between the downcomer 1 and the riser 2, and the lower parts of the downcomer 1 and the riser 2 are interconnected. A back feeding cooling partition 5 is disposed between the riser 2 and the return chute 3, and the upper parts of the riser 2 and the return chute 3 are interconnected. The casing of the loop seal is formed by welding water cooling membrane walls and is covered with refractory at the inner surface.

The intermediate partition 4 and the material returning partition 5 are constituted by the cooling tube bundles which are arranged vertically. There are fins among these tubes. The upper ends of cooling tube bundles for the intermediate partition 4 extend out of the casing of the loop seal and converge into the upper header 43 for the intermediate partition 4, and the lower ends of cooling tube bundles for the intermediate partition 4 converge into the upper header 44 for the intermediate partition at the bottom of the intermediate partition 4 in the loop seal. Both the cooling tube bundles for the intermediate partition 4 and the upper header 44 for the intermediate partition are covered with refractory at the outer surface.

As is shown in Fig. 9, the upper ends of the cooling tubes for the material returning partition 5 converge into the upper header 53 for the material returning partition at the top of the material returning partition 5 in the loop seal, and the lower ends of cooling tubes extend out of the casing of the loop seal and converge into the left-lower header 541 and right-lower header 542 for the material returning partition. Both the cooling tube bundles for the material returning partition 5 and the headers 541 and 542 are covered with refractory at the outer surface. The left-lower header 541 and the right-lower header 542 for the material returning partition 5 are connected with the left half and the right half of cooling tubes for the material returning partition 5, respectively. The cooling medium enters the left-lower header 541 for the material returning partition, passes through the left side of the cooling tubes, flows into the right side of the cooling tubes via upper header 53 for the material returning partition, and finally flows out from the right-lower header 542. This design is suitable for the condition that the cooling medium is boiler feedwater, or from the outlet of boiler economizer, or the saturated steam from drum, but not suitable for the condition that the circulating water from the drum downcomer is served as the cooling medium.

### 6^{th} Embodiment

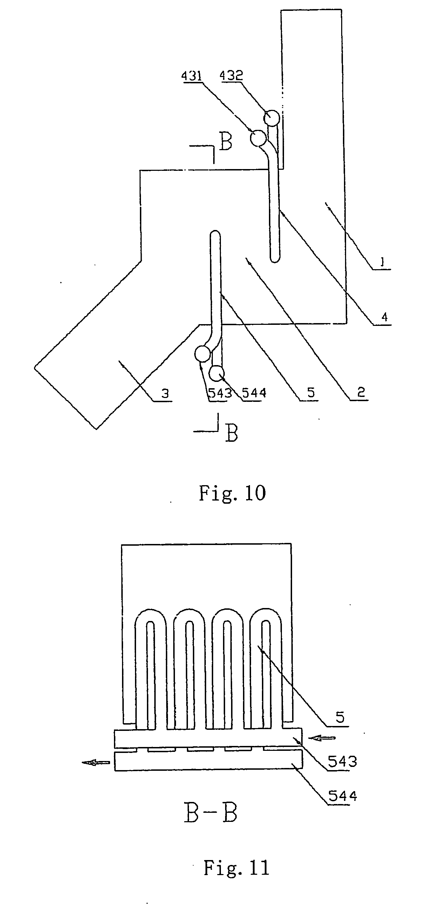

The U-valve in Fig. 10 is composed of a downcomer 1, a riser 2, and a return chute 3 which are sequentially connected and each of which has a rectangular cross-section. An intermediate cooling partition 4 is disposed between the downcomer 1 and riser 2, and the lower parts of the downcomer 1 and the riser 2 are interconnected. A material returning cooling partition 5 is disposed between the riser 2 and the return chute 3, and the upper parts of the riser 2 and the return chute 3 are interconnected. The casing of the loop seal is formed by welding water cooling membrane water and is covered with refractory at the inner surface.

The intermediate partition 4 and the material returning partition 5 are constituted by the cooling tube bundles which are arranged vertically. There are fins among these tubes. As is shown in Fig. 11, each cooling tube of the cooling tube bundles for the partitions is U-shaped, and the center line of the segment of all the cooling tubes for each partition in loop seal is located in the same plane, except the bending portion extending out of the casing of the loop seal. The planes where the tube bundles of the intermediate partition 4 and the material returning partition 5 are located are in parallel and perpendicular to the plane where the center lines of the downcomer and riser of the loop seal are located, that is, perpendicular to the flowing direction of the circulating ash in the loop seal. There are fins among these tubes. Further, pins are welded to the fins and the tubes which covered with refractory at the outer surface. Both ends of U-shaped cooling tubes extend out of the casing of the loop seal and respectively converge into two horizontal headers. The left end of each U-shaped cooling tube of the intermediate partition 4 converges into the header 432 and the right end into the header 431. The left end of each U-shaped cooling tube of the material returning partition 5 converges into the header 543 and the right end into the header 544. The saturated steam water from drum flows into the left end of one header for each partition, passes through the cooling tube bundles, and finally flows out from the right end of the other header.

### 7^{th} Embodiment

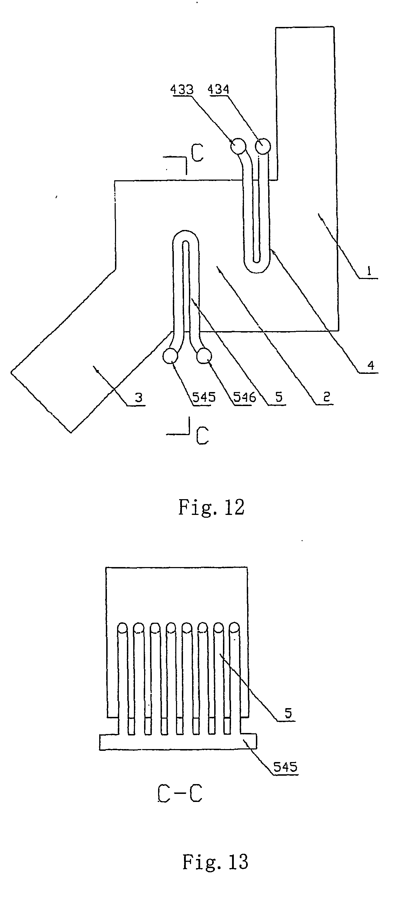

The U-valve in Fig. 12 is composed of a downcomer 1, a riser 2, and a return chute 3 which are sequentially connected and each of which has a rectangular cross-section. An intermediate cooling partition 4 is disposed between the downcomer 1 and riser 2, and the lower parts of the downcomer 1 and the riser 2 are interconnected. A material returning cooling partition 5 is disposed between the riser 2 and the return chute 3, and the upper parts of the riser 2 and the return chute 3 are interconnected. The casing of the loop seal is formed by welding water cooling membrane walls and is covered with refractory at the inner surface.

The intermediate partition 4 and the material returning partition 5 are constituted by the cooling tube bundles which are arranged vertically. As is shown in Fig. 13, each cooling tube constituting the partitions is a U-shaped and is located in different planes, but these planes are in parallel with each other and also in parallel with flowing direction of the circulating ash in the loop seal, that is, these planes are in parallel with the plane where the center lines of the downcomer and riser are located. Among these tubes there is no fin, instead pins are intensively welded among these tubes for laying the refractory.

Both ends of the U-shaped cooling tubes extend out of the casing of the loop seal and converge into two horizontal headers. The front end of each U-shaped cooling tube of the intermediate partition 4 converges into the header 433 and the rear end into the header 434. The front end of each U-shaped cooling tube of the material returning partition 5 converges into the header 545 and the rear end into the header 546. Boiler feed water enters the left end of one header of each partition, passes through the cooling tube bundles in the partitions, and finally flows out from the right end of the other header.

## Claims

1. A U-valve comprising a casing and cooling partitions, the cooling partitions including an intermediate partition (4) located vertically between a downcomer (1) and a riser (2) of the U-valve, and a material returning partition (5) located vertically between the riser (2) and a return chute (3), wherein the intermediate partition (4) and the material returning partition (5) comprise cooling tube bundles and refractory covered at an outer surface of the cooling tubes, and wherein there is cooling medium in the cooling tubes, the U-valve being **characterized in that**: at least one end of the cooling tube bundles extends out of the casing of the U-valve and is connected with headers at the outside of the casing of the U-valve; and a cooling medium flow path for the cooling partitions is independent of a cooling medium flow path in the casing of the U-valve.

2. The U-valve according to Claim 1, **characterized in that**: the cooling medium in said cooling tubes is boiler feed water or medium at the outlet of boiler economizer or the saturated steam from drum.

3. The U-valve according to Claim 1, **characterized in that**: the cooling medium in said cooling tubes is circulating water from the drum downcomer.

4. The U-valve according to Claim 1 or 2 or 3, **characterized in that**: the cooling tubes of said cooling tube bundles are vertically arranged, and the cooling medium in said cooling tubes flows in a vertical direction, and, there are fins among said cooling tubes.

5. The U-valve according to Claim 4, **characterized in that**: the upper ends of the cooling tube bundles for said intermediate partition (4) extend out of the casing of the U-valve and converge into an upper header (43) for the intermediate partition at the outside of the U-valve, and lower ends of the cooling tube bundles for said intermediate partition (4) converge into a lower header (44) for the intermediate partition at the inside of the U-valve; and, the lower ends of the cooling tubes for said material returning partition (5) extend out of the casing of the U-valve and converge into a lower header (54) for the material returning partition beneath the bottom of the U-valve and the upper ends of the cooling tube bundles for said material returning partition (5) converge into an upper header (53) for the material returning partition in the U-valve;
the headers (44, 53) in the U-valve are covered with refractory at their outer surface; and
the upper header (43) for the intermediate partition, the lower header (44) for the intermediate partition, the upper header (53) for the material returning partition or the lower header (54) for the material returning partition are all horizontally arranged.

6. The U-valve according to Claim 1 or 2 or 3, **characterized in that**: the tubes of said cooling tube bundles are horizontally arranged, and the cooling medium in said cooling tubes flows in the horizontal direction, and, there are fins among these cooling tubes.

7. The U-valve according to Claim 6, **characterized in that**: both ends of the cooling tube bundles for said intermediate partition (4) and material returning partition (5) extend out of the casing of the U-valve and then converge into the headers at both sides of the casing of the U-valve; and, the left and right sides of both the intermediate partition (4) and material returning partition (5) are connected with the headers (41, 42, 51, 52), respectively, and these four headers are all vertically arranged.

8. The U-valve according to Claim 7, **characterized in that**: said intermediate partition (4) and material returning partition (5) are connected in parallel, that is, the headers at one of the left or right side of the intermediate partition (4) and material returning partition (5) are served as inlet headers for cooling medium in the cooling tubes, and the headers at the other of the left or right side of the intermediate partition (4) and material returning partition (5) are served as outlet headers for cooling medium in the cooling tubes; and, the cooling medium flows horizontally through the intermediate partition (4) and material returning partition (5) at the same time.

9. The U-valve according to Claim 7, **characterized in that**: said intermediate partition (4) and material returning partition (5) are connected in series, that is, the headers at the left sides of the intermediate partition (4) and material returning partition (5) are connected with each other via the connecting tubes for the headers, and one of the headers at the right sides of the intermediate partition (4) and material returning partition (5) is served as the inlet header for cooling medium while the other one is served as the outlet header for cooling medium; and, the cooling medium flows horizontally through the intermediate partition (4) first and then through the material returning partition (5), or flows horizontally through the material returning partition (5) first and then through the intermediate partition (4).

10. The U-valve according to Claim 7, **characterized in that**: said intermediate partition (4) and material returning partition (5) are connected in series, that is, the headers at the right sides of the intermediate partition (4) and material returning partition (5) are connected with each other via the connecting tubes for the headers, and one of the headers at the left sides of the intermediate partition (4) and material returning partition (5) is served as the inlet header for cooling medium while the other is served as the outlet header for cooling medium; and, the cooling medium flows horizontally through the intermediate partition (4) first and then through the material returning partition (5), or flows horizontally through the material returning partition (5) first and then the intermediate partition (4).

11. The U-valve according to Claim 6, **characterized in that**: both ends of cooling tubes for said intermediate partition (4) and material returning partition (5) extend out of the casing of the U-valve and converge into the headers at both sides of the casing of the U-valve; and,
the headers (451, 452) are provided at both sides of the casing of the U-valve; the left ends of the cooling tubes for said intermediate partition (4) and material returning partition (5) converge into the left header (451), and the right ends of the cooling tubes for said intermediate partition (4) and material returning partition (5) converge into the right header (452); and, one of the left and right headers (451, 452) is served as the inlet header for cooling medium in the cooling tubes while the other is served as the outlet header for cooling medium in the cooling tubes.

12. The U-valve according to Claim 1 or 2, **characterized in that**: the cooling tubes of said cooling tube bundles are U-shaped and the straight segments of the U-shaped cooling tubes are vertically arranged; both ends of the cooling tubes extend out of the casing of the U-valve and converge into the two headers (431, 432/543, 544) located outside the casing of the U-valve, respectively, and the four headers (431, 432, 543, 544) are horizontally arranged; and, the cooling medium flows along the vertical direction in the vertical segments of the U-shaped cooling tubes.

13. The U-valve according to Claim 12, **characterized in that**: the center lines of the segments of the U-shaped cooling tubes inside the casing of the U-valve for the intermediate partition (4) are located in one plane; the center lines of the segments of U-shaped cooling tubes inside the casing of the U-valve or the material returning partition (5) are located in another plane; the above two planes are perpendicular to the plane where the center lines of the downcomer and riser are located; and, there are fins among these cooling tubes.

14. The U-valve according to Claim 12, **characterized in that**: the center lines of the segments of the U-shaped cooling tubes inside the casing of the U-valve for the intermediate partition (4) are located in one plane; the center lines of the segments of U-shaped cooling tubes inside the casing of the U-valve or the material returning partition (5) are located in another plane; and all the planes where the center lines of the segments of the U-shaped cooling tubes inside the casing of the U-valve for said intermediate partition (4) and material returning partition (5) are in parallel, and also in parallel with the plane where the center lines of the downcomer and riser are located.

## Patentansprüche

1. U-Ventil mit einem Gehäuse und Kühlbereichen, wobei die Kühlbereiche einen Zwischenbereich (4) aufweisen, der vertikal zwischen einem Fallrohr (1) und einem Steigrohr (2) des U-Ventils angeordnet ist, und einem Materialrückführbereich (5), der vertikal zwischen dem Steigrohr (2) und einem Rückführkanal (3) angeordnet ist, wobei der Zwischenbereich (4) und der Materialrückführbereich (5) Kühlrohrbündel und ein an der Außenseite der Kühlrohre angebrachtes feuerfestes Material aufweisen, und wobei sich in den Kühlrohren ein Kühlmittel befindet, wobei das U-Ventil **dadurch gekennzeichnet ist, dass** sich mindestens ein Ende der Kühlrohrbündel aus dem Gehäuse des U-Ventils erstreckt und mit Sammelrohren außen an dem Gehäuse des U-Ventils verbunden ist; und ein Kühlmittel-Durchflussweg für die Kühlbereiche unabhängig von einem Kühlmittel-Durchflussweg in dem Gehäuse des U-Ventils ist.

2. U-Ventil gemäß Anspruch 1, **dadurch gekennzeichnet, dass** das Kühlmittel in den Kühlrohren Kesselspeisewasser oder ein Mittel am Auslass eines Speisewasservorwärmers oder der gesättigte Dampf aus einer Trommel ist.

3. U-Ventil gemäß Anspruch 1, **dadurch gekennzeichnet, dass** das Kühlmedium in den Kühlrohren umlaufendes Wasser aus dem Trommel-Fallrohr ist.

4. U-Ventil gemäß Anspruch 1 oder 2 oder 3, **dadurch gekennzeichnet, dass** die Kühlrohre der Kühlrohrbündel vertikal angeordnet sind und das Kühlmittel in den Kühlrohren in einer vertikalen Richtung fließt und sich zwischen den Kühlrohren Rippen befinden.

5. U-Ventil gemäß Anspruch 4, **dadurch gekennzeichnet, dass** sich die oberen Enden der Kühlrohrbündel für den Zwischenbereich (4) aus dem Gehäuse des U-Ventils erstrecken und in einem oberem Sammelrohr (43) für den Zwischenbereich außen am U-Ventil zusammenlaufen, und untere Enden der Kühlrohrbündel für den Zwischenbereich (4) in einem unteren Sammelrohr (44) für den Zwischenbereich innen am U-Ventil zusammenlaufen; und die unteren Enden der Kühlrohre für den Materialrückführbereich (5) sich aus dem Gehäuse des U-Ventils erstrecken und in einem unteren Sammelrohr (54) für den Materialrückführbereich unter der Unterseite des U-Ventils zusammenlaufen und die oberen Enden der Kühlrohrbündel für den Materialrückführbereich (5) in einem oberen Sammelrohr (53) für den Materialrückführbereich im U-Ventil zusammenlaufen;
die Sammelrohre (44, 53) in dem U-Ventil an ihrer Außenseite mit feuerfestem Material bedeckt sind; und
das obere Sammelrohr (43) für den Zwischenbereich, das untere Sammelrohr (44) für den Zwischenbereich, das obere Sammelrohr (53) für den Materialrückführbereich oder das untere Sammelrohr (54) für den Materialrückführbereich alle horizontal angeordnet sind.

6. U-Ventil gemäß Anspruch 1, 2 oder 3, **dadurch gekennzeichnet, dass** die Rohre der Kühlrohrbündel horizontal angeordnet sind und das Kühlmittel in den Kühlrohren in horizontaler Richtung fließt und sich zwischen diesen Kühlrohren Rippen befinden.

7. U-Ventil gemäß Anspruch 6, **dadurch gekennzeichnet, dass** sich beide Enden der Kühlrohrbündel für den Zwischenbereich (4) und den Materialrückführbereich (5) aus dem Gehäuse des U-Ventils erstrecken und dann in den Sammelrohren an beiden Seiten des Gehäuses des U-Ventils zusammenlaufen; und die linken und rechten Seiten des Zwischenbereichs (4) und des Materialrückführbereichs (5) mit den Sammelrohren (41, 42, 51, 52) verbunden sind und diese vier Sammelrohre alle vertikal angeordnet sind.

8. U-Ventil gemäß Anspruch 7, **dadurch gekennzeichnet, dass** der Zwischenbereich (4) und der Materialrückführbereich (5) parallel angeschlossen sind, das heißt die Sammelrohre an der linken oder der rechten Seite des Zwischenbereichs (4) und des Materialrückführbereichs (5) dienen als Einlass-Sammelrohre für das Kühlmittel in die Kühlrohre, und die Sammelrohre an der rechten oder der linken Seite des Zwischenbereichs (4) und des Materialrückführbereichs (5) dienen als Auslass-Sammelrohre für das Kühlmittel in den Kühlrohren; und das Kühlmittel fließt gleichzeitig horizontal durch den Zwischenbereich (4) und den Materialrückführbereich (5).

9. U-Ventil gemäß Anspruch 7, **dadurch gekennzeichnet, dass** der Zwischenbereich (4) und der Materialrückführbereich (5) in Serie angeschlossen sind, das heißt die Sammelrohre an den linken Seiten des Zwischenbereichs (4) und des Materialrückführbereichs (5) sind miteinander über die Verbindungsrohre für die Sammelrohre verbunden, und eines der Sammelrohre an den rechten Seiten des Zwischenbereichs (4) und des Materialrückführbereichs (5) dient als Einlass-Sammelrohr für das Kühlmittel, während das andere als Auslass-Sammelrohr für das Kühlmittel dient; und das Kühlmittel fließt zuerst horizontal durch den Zwischenbereich (4) und dann durch den Materialrückführbereich (5) oder fließt zuerst horizontal durch den Materialrückführbereich (5) und dann durch den Zwischenbereich (4).

10. U-Ventil gemäß Anspruch 7, **dadurch gekennzeichnet, dass** der Zwischenbereich (4) und der Materialrückführbereich (5) in Serie angeschlossen sind, das heißt die Sammelrohre an den rechten Seiten des Zwischenbereichs (4) und des Materialrückführbereichs (5) sind miteinander über die Verbindungsrohre für die Sammelrohre verbunden, und eines der Sammelrohre an den linken Seiten des Zwischenbereichs (4) und des Materialrückführbereichs (5) dient als Einlass-Sammelrohr für das Kühlmittel, während das andere als Auslass-Sammelrohr für das Kühlmittel dient; und das Kühlmittel fließt zuerst horizontal durch den Zwischenbereich (4) und dann durch den Materialrückführbereich (5) oder fließt zuerst horizontal durch den Materialrückführbereich (5) und dann durch den Zwischenbereich (4).

11. U-Ventil gemäß Anspruch 6, **dadurch gekennzeichnet, dass** beide Enden der Kühlrohre für den Zwischenbereich (4) und den Materialrückführbereich (5) sich aus dem Gehäuse des U-Ventils erstrecken und in den Sammelrohren an beiden Seiten des Gehäuses des U-Ventils zusammenlaufen; und die Sammelrohre (451, 452) an beiden Seiten des Gehäuses des U-Ventils vorgesehen sind; die linken Enden der Kühlrohre für den Zwischenbereich (4) und den Materialrückführbereich (5) in dem linken Sammelrohr (451) zusammenlaufen, und die rechten Enden der Kühlrohre für den Zwischenbereich (4) und den Materialrückführbereich (5) in dem rechten Sammelrohr (452) zusammenlaufen; und eines der linken und rechten Sammelrohre (451, 452) als Einlass-Sammelrohr für das Kühlmedium in den Kühlrohren dient, während das andere als Auslass-Sammelrohr für das Kühlmedium in den Kühlrohren dient.

12. U-Ventil gemäß Anspruch 1 oder 2, **dadurch gekennzeichnet, dass** die Kühlrohre der Kühlrohrbündel U-förmig sind und die geraden Segmente der U-förmigen Kühlrohre vertikal angeordnet sind; beide Enden der Kühlrohre sich aus dem Gehäuse des U-Ventils erstrecken und in den beiden Sammelrohren (431, 432/543, 544) zusammenlaufen, die jeweils außen an dem Gehäuse des U-Ventils angeordnet sind, und die vier Sammelrohre (431, 432, 543, 544) horizontal angeordnet sind; und das Kühlmittel entlang der vertikalen Richtung in den vertikalen Segmenten der U-förmigen Kühlrohre fließt.

13. U-Ventil gemäß Anspruch 12, **dadurch gekennzeichnet, dass** die Mittellinien der Segmente der U-förmigen Kühlrohre in dem Gehäuse des U-Ventils für die Zwischenbereich (4) in einer Ebene angeordnet sind; die Mittellinien der Segmente der U-förmigen Kühlrohre in dem Gehäuse des U-Ventils für den Materialrückführbereich (5) in einer anderen Ebene angeordnet sind; die beiden Ebenen oben senkrecht zur Ebene sind, wo die Mittellinien des Fallrohrs und des Steigrohrs angeordnet sind; und sich zwischen den Kühlrohren Rippen befinden.

14. U-Ventil gemäß Anspruch 12, **dadurch gekennzeichnet, dass** die Mittellinien der Segmente der U-förmigen Kühlrohre in dem Gehäuse des U-Ventils für den Zwischenbereich (4) in einer Ebene angeordnet sind; die Mittellinien der Segmente der U-förmigen Kühlrohre in dem Gehäuse des U-Ventils für den Materialrückführbereich (5) in einer anderen Ebene angeordnet sind; und alle die Ebenen, wo die Mittelinien der Segmente der U-förmigen Kühlrohre in dem Gehäuse des U-Ventils für den Zwischenbereich (4) und den Materialrückführbereich (5) parallel sind, auch parallel zu der Ebene sind, in der die Mittellinien des Fallrohrs und des Steigrohrs angeordnet sind.

## Revendications

1. Soupape en forme de U comprenant un carter et des partitions de refroidissement, les partitions de refroidissement englobant une partition intermédiaire (4) située à la verticale entre une conduite descendante (1) et une conduite montante (2) de la soupape en forme de U, ainsi qu'une partition de retour de matière (5) située à la verticale entre la conduite montante (2) et un canal de retour (3), dans laquelle la partition intermédiaire (4) et la partition de retour de matière (5) comprennent des faisceaux de tuyaux de refroidissement ainsi qu'un matériau réfractaire couvrant une surface extérieure des tuyaux de refroidissement, et dans laquelle un agent réfrigérant se trouve dans les tuyaux de refroidissement, la soupape en forme de U étant **caractérisée en ce qu'**au moins une extrémité des faisceaux de tuyaux de refroidissement s'étend en dehors du carter de la soupape en forme de U et est reliée à des collecteurs à l'extérieur du carter de la soupape en forme de U ; et **en ce qu'**une trajectoire d'écoulement de l'agent réfrigérant pour les partitions de refroidissement est indépendante d'une trajectoire d'écoulement de l'agent réfrigérant dans le carter de la soupape en forme de U.

2. Soupape en forme de U selon la revendication 1, **caractérisée en ce que** l'agent réfrigérant situé dans lesdits tuyaux de refroidissement est de l'eau d'alimentation de chaudière ou une substance située à la sortie de l'économiseur de chaudière ou de la vapeur d'eau saturée du tambour.

3. Soupape en forme de U selon la revendication 1, **caractérisée en ce que** l'agent réfrigérant situé dans lesdits tuyaux de refroidissement est de l'eau de circulation venant de la conduite descendante du tambour.

4. Soupape en forme de U selon la revendication 1 ou 2 ou 3, **caractérisée en ce que** les tuyaux de refroidissement desdits faisceaux de tuyaux de refroidissement sont disposés à la verticale et **en ce que** l'agent réfrigérant situé dans lesdits tuyaux de refroidissement s'écoule à la verticale et **en ce que** lesdits tuyaux de refroidissement comprennent des ailettes.

5. Soupape en forme de U selon la revendication 4, **caractérisée en ce que** les extrémités supérieures des faisceaux de tuyaux de refroidissement pour ladite partition intermédiaire (4) s'étendent en dehors du carter de la soupape en forme de U et convergent en un collecteur supérieur (43) pour la partition intermédiaire à l'extérieur de la soupape en forme de U et **en ce que** les extrémités inférieures des faisceaux de tuyaux de refroidissement pour ladite partition intermédiaire (4) convergent en un collecteur inférieur (44) pour la partition intermédiaire à l'intérieur de la soupape en forme de U et **en ce que** les extrémités inférieures des tuyaux de refroidissement pour ladite partition de retour de matière (5) s'étendent en dehors du carter de la soupape en forme de U et convergent en un collecteur inférieur (54) pour la partition de retour de matière sous le fond de la soupape en forme de U et **en ce que** les extrémités supérieures des faisceaux de tuyaux de refroidissement pour ladite partition de retour de matière (5) convergent en un collecteur supérieur (53) pour la partition de retour de matière dans la soupape en forme de U ; **en ce que** les collecteurs (44, 53) dans la soupape en forme de U sont couverts de matériau réfractaire sur leur surface extérieure ; et **en ce que** le collecteur supérieur (43) pour la partition intermédiaire, le collecteur inférieur (44) pour la partition intermédiaire, le collecteur supérieur (53) pour la partition de retour de matière ou le collecteur inférieur (54) pour la partition de retour de matière sont tous disposés horizontalement.

6. Soupape en forme de U selon la revendication 1 ou 2 ou 3, **caractérisée en ce que** les tuyaux desdits faisceaux de tuyaux de refroidissement sont disposés à l'horizontale et **en ce que** l'agent réfrigérant situé dans lesdits tubes de refroidissement s'écoule horizontalement et **en ce que** ces tuyaux de refroidissement comprennent des ailettes.

7. Soupape en forme de U selon la revendication 6, **caractérisée en ce que** les deux extrémités des faisceaux de tuyaux de refroidissement pour ladite partition intermédiaire (4) et la partition de retour de matière (5) s'étendent en dehors du carter de la soupape en forme de U et convergent ensuite dans les collecteurs des deux côtés du carter de la soupape en forme de U et **en ce que** le côté gauche et le côté droit de la partition intermédiaire (4) et de la partition de retour de matière (5) sont connectés aux collecteurs (41, 42, 51, 52), respectivement, et **en ce que** ces quatre collecteurs sont tous disposés à la verticale.

8. Soupape en forme de U selon la revendication 7, **caractérisée en ce que** ladite partition intermédiaire (4) et la partition de retour de matière (5) sont connectées en parallèle, ce qui signifie que les collecteurs sur l'un parmi le côté gauche ou le côté droit de la partition intermédiaire (4) et de la partition de retour de matière (5) sont utilisés comme collecteurs d'entrée pour l'agent réfrigérant dans les tuyaux de refroidissement et que les collecteurs sur l'autre parmi le côté gauche ou le côté droit de la partition intermédiaire (4) et de la partition de retour de matière (5) sont utilisés comme collecteurs de sortie pour l'agent réfrigérant dans les tuyaux de refroidissement et **en ce que** l'agent réfrigérant s'écoule horizontalement à travers la partition intermédiaire (4) et la partition de retour de matière (5) en même temps.

9. Soupape en forme de U selon la revendication 7, **caractérisée en ce que** ladite partition intermédiaire (4) et la partition de retour de matière (5) sont connectées en série, ce qui signifie que les collecteurs des côtés gauches de la partition intermédiaire (4) et de la partition de retour de matière (5) sont connectés via les tuyaux de connexion pour les collecteurs et que l'un des collecteurs des côtés droits de la partition intermédiaire (4) et de la partition de retour de matière (5) est utilisé comme collecteur d'entrée pour l'agent réfrigérant tandis que l'autre est utilisé comme collecteur de sortie pour l'agent réfrigérant et **en ce que** l'agent réfrigérant s'écoule horizontalement à travers la partition intermédiaire (4) premièrement et ensuite à travers la partition de retour de matière (5) ou s'écoule horizontalement à travers la partition de retour de matière (5) premièrement et ensuite à travers la partition intermédiaire (4).

10. Soupape en forme de U selon la revendication 7, **caractérisée en ce que** ladite partition intermédiaire (4) et la partition de retour de matière (5) sont connectées en série, ce qui signifie que les collecteurs des côtés droits de la partition intermédiaire (4) et de la partition de retour de matière (5) sont connectés via les tuyaux de connexion pour les collecteurs et que l'un des collecteurs des côtés gauches de la partition intermédiaire (4) et de la partition de retour de matière (5) est utilisé comme collecteur d'entrée pour l'agent réfrigérant tandis que l'autre est utilisé comme collecteur de sortie pour l'agent réfrigérant et **en ce que** l'agent réfrigérant s'écoule horizontalement à travers la partition intermédiaire (4) premièrement et ensuite à travers la partition de retour de matière (5) ou s'écoule horizontalement à travers la partition de retour de matière (5) premièrement et ensuite à travers la partition intermédiaire (4).

11. Soupape en forme de U selon la revendication 6, **caractérisée en ce que** les deux extrémités des tuyaux de refroidissement pour ladite partition intermédiaire (4) et la partition de retour de matière (5) s'étendent en dehors du carter de la soupape en forme de U et convergent vers les collecteurs des deux côtés du carter de la soupape en forme de U et **en ce que** les collecteurs (451, 452) sont prévus des deux côtés du carter de la soupape en forme de U ; **en ce que** les extrémités gauches des tuyaux de refroidissement pour ladite partition intermédiaire (4) et la partition de retour de matière (5) convergent vers le collecteur gauche (451) et **en ce que** les extrémités droites des tuyaux de refroidissement pour ladite partition intermédiaire (4) et la partition de retour de matière (5) convergent vers le collecteur droit (452) et **en ce que** l'un parmi les collecteurs gauche et droit (451, 452) est utilisé comme collecteur d'entrée pour l'agent réfrigérant dans les tuyaux de refroidissement tandis que l'autre est utilisé comme collecteur de sortie pour l'agent réfrigérant dans les tuyaux de refroidissement.

12. Soupape en forme de U selon la revendication 1 ou 2, **caractérisée en ce que** les tuyaux de refroidissement desdits faisceaux de tuyaux de refroidissement sont en forme de U et **en ce que** les segments droits des tuyaux de refroidissement en forme de U sont disposés à la verticale, **en ce que** les deux extrémités des tuyaux de refroidissement s'étendent en dehors du carter de la soupape en forme de U et convergent dans les deux collecteurs (431, 432
/ 543, 544) situés en dehors du carter de la soupape en forme de U, respectivement, et **en ce que** les quatre collecteurs (431, 432, 543, 544) sont disposés à l'horizontale et **en ce que** l'agent réfrigérant s'écoule le long de la direction verticale dans les segments verticaux des tuyaux de refroidissement en forme de U.

13. Soupape en forme de U selon la revendication 12, **caractérisée en ce que** les lignes centrales des segments des tuyaux de refroidissement en forme de U à l'intérieur du carter de la soupape en forme de U pour la partition intermédiaire (4) sont situées dans un plan, **en ce que** les lignes centrales des segments des tuyaux de refroidissement en forme de U à l'intérieur du carter de la soupape en forme de U pour la partition de retour de matière (5) sont situés dans un autre plan, **en ce que** les deux plans mentionnés supra sont perpendiculaires au plan dans lequel les lignes centrales de la conduite descendante et de la conduite montante se trouvent et **en ce que** ces tuyaux de refroidissement comprennent des ailettes.

14. Soupape en forme de U selon la revendication 12, **caractérisée en ce que** les lignes centrales des segments des tuyaux de refroidissement en forme de U à l'intérieur du carter de la soupape en forme de U pour la partition intermédiaire (4) sont situées dans un plan, **en ce que** les lignes centrales des segments des tuyaux de refroidissement en forme de U à l'intérieur du carter de la soupape en forme de U pour la partition de retour de matière (5) sont situées dans un autre plan et **en ce que** l'ensemble des plans dans lesquels les lignes centrales des segments des tuyaux de refroidissement en forme de U à l'intérieur du carter de la soupape en forme de U pour ladite partition intermédiaire (4) et la partition de retour de matière (5) sont en parallèle, et également en parallèle avec le plan dans lequel les lignes centrales de la conduite descendante et de la conduite montante se trouvent.
